# EUROPEAN PATENT SPECIFICATION

(11) **EP 3 451 849 B1**
(45) Date of publication and mention of the grant of the patent: **08.04.2020**
(21) Application number: 17732559.4
(22) Date of filing: 03.05.2017
(51) Int. Cl.: A23G 4/06, A23G 4/10

(54) **CHEWING GUM WITH STEVIA**
KAUGUMMI MIT STEVIA
GOMME À MÂCHER CONTENANT DU STÉVIA

(30) Priority: 06.05.2016 IT UA20163230
(43) Date of publication of application: 13.03.2019
(73) Proprietor: Perfetti Van Melle S.p.A., 20020 Lainate (Milano) (IT)
(72) Inventor: MIKKELSEN, Rikke, 7100 Vejle (DK); VIOLI, Marco, 21040 Origgio (VA) (IT); SULEYMANOGLU, Evsen, 20145 Milano (MI) (IT)
(74) Representative: Bianchetti Bracco Minoja S.r.l.
(86) International application number: PCT/IB2017/052564
(87) International publication number: WO 2017/191571

(56) References cited:
- GB-A- 2 052 946
- GB-A- 2 225 923
- US-A1- 2007 116 800
- US-A1- 2014 199 433

## Description

The object of the invention is chewing gum comprising stevia as sweetener, at least one calcium salt, and one or more high-viscosity elastomers.

### PRIOR ART

Chewing gum typically comprises one water-soluble part consisting of sugar or sugar substitutes (i.e. polyalcohols and intensive sweeteners), flavourings, colorants and optionally other additives, such as acidifiers or coating and polishing agents, and one non-water-soluble part called gum base which has the crucial function of providing a chewable support.

Gum base consists of a plurality of ingredients which can be grouped by function under one or more of the following categories: elastomers, polymer plasticisers or resins, plasticisers, emulsifiers and fillers. Each of said substances has a specific role in providing the consistency and chewing properties of chewing gum when mixed with water-soluble ingredients.

Elastomers, such as polyisobutylene, isobutylene-isoprene copolymer, styrene-butadiene copolymer, vinyl acetate-vinyl laurate copolymer, polyethylene and vinyl acetate-vinyl alcohol-vinyl versatate terpolymer, represent the core of the gum base, while polymer plasticisers or resins, such as polyvinyl acetate, methyl, pentaerythritol or glycerol esters, obtained from wood rosin, exudate (or gum rosin) or tall oil, which may be hydrogenated or non-hydrogenated, dimerised or non-dimerised, polymerised or non-polymerised, in the various possible permutations, and polyterpene resins, increase their compatibility with the other ingredients.

In addition to said substances, plasticisers properly so called modulate the softness characteristics of the product by attenuating its elastic characteristics due to the elastomer component, helping to soften it and give it a characteristic and a bite resistance which appeal to the user's palate. Examples of plasticisers include vegetable and animal fats, optionally hydrogenated or fractionated, triacetin, microcrystalline waxes, paraffin waxes and synthetic waxes.

Emulsifiers help to optimise the consistency of the chewable bolus, to make the various ingredients of the gum base compatible with one another, and to give it a smoother mouthfeel by reducing its roughness. Examples of emulsifiers include lecithins, glycerol esters of sucralose, mono-, di- and triglycerides of fatty acids, acetylated monoglycerides, and propylene glycol.

The fillers act as texturing agents, penetrating between the elastomer chains and contributing to the volume of the chewable bolus. Examples of plasticisers are calcium carbonate, talc, and calcium phosphates.

In addition to the ingredients described above, the gum base can contain antioxidants which, though not directly performing a mechanical function on the product, protect its various ingredients against degradation, thus preventing the development of unpleasant aftertastes and maintaining the palatability of the gum for long periods.

Chewing gums are conventionally sweetened with sugar or non-cariogenic substitutes; for example, the combination of polyalcohols or polyols and intensive sweeteners is known.

Intensive sweeteners possess a sweetening power many times greater than that of sugar, and are therefore conventionally combined with polyols, which have a lower power, to give a sweet taste to chewing gum which is equal to or greater than that of a gum sweetened with sugar. In view of this characteristic, they are only used in small amounts.

Examples of intensive sweeteners include acesulfame K, alitame, aspartame, cyclamate, glycyrrhizin, neotame, neohesperidin dihydrocalcone, saccharine, sucralose and others, as described by Fritz (Douglas Fritz, "Formulation and Production of Chewing Gum and Bubble Gum", Kennedy's Books Ltd, 2008).

Another particularly interesting intensive sweetener is stevia, specifically the steviol glycosides extracted from the plant *Stevia rebaudiana,* the composition whereof is extensively described in the literature.

US 4,271,197 refers to the possibility of introducing stevia into a sugar-free chewing gum, but only provides some partial indications of the possible gum base compositions suitable for products with stevia, substantially containing natural gums which, due to their intrinsic problems of tackiness and poor chewability, have been almost entirely superseded.

US2007/116800 A1 relates to different chewing gum compositions comprising at least one non-caloric or low-caloric natural and synthetic high-potency sweetener, at least one sweet taste improving composition, and a gum base.

Although stevia has been known for many years and its use in chewing gum is allowed in Europe and other countries, there are currently no products made with said substance on the market.

This may be due to the fact that stevia, even if used in small amounts, has a plasticising effect on the gum base formulation, which makes the gum unpleasant to chew and may even cause it to flake or disintegrate during chewing. It is also obvious that introducing additional substances with a plasticising function into such a complex matrix may lead to a product with chewing characteristics that are unsatisfactory to consumers or give rise to problems during the manufacturing process as a result of excessive softening.

### DESCRIPTION OF THE INVENTION

It has now been discovered that the gum base plasticising problem caused by stevia can be eliminated by suitably selecting the ingredients of the gum base and adding a calcium salt.

It has been found in particular that high-viscosity elastomers, with the addition of a calcium salt, are not subject to the plasticising induced by even small amounts of stevia sweetener (0.05% or more), a phenomenon which is all the more unexpected because the intensive sweeteners conventionally used do not give rise to plasticising.

The object of the invention is therefore chewing gums comprising at least 0.05% stevia, at least one calcium salt as filler, and one or more high-viscosity elastomers.

The high-viscosity elastomers which can be used according to the invention are preferably elastomers derived from polymerisation or copolymerisation of isobutylene or butadiene with other monomers. Examples of said high-viscosity elastomers include butyl rubber, polyisobutylene and styrene-butadiene copolymer.

Isobutylene and isoprene copolymer (butyl rubber) is particularly preferred. A type of butyl rubber particularly suitable for the purposes of the invention has a Mooney viscosity of 51 ± 5 units measurable by the ASTM D1646 method, and an unsaturation level ranging from 1% and 3%. In addition to high-viscosity elastomers, the gum base also contains conventional ingredients such as low-viscosity elastomers, resins and emulsifiers.

A carbonate preferably having a small particle size, substantially ranging from 0.1 to 100 µm, preferably from 0.1 to 30 µm, most preferably from 0.1 to 15 µm, is preferred as calcium salt.

The weight ratio between filler(s) and high-viscosity elastomer(s) advantageously ranges from 1:1 to 15:1, preferably from 2:1 to 13.5:1.

Moreover, a minimum value for the high-viscosity elastomer or combination of elastomers amounting to 2% of the gum base is considered preferable to obtain the desired compensation effect, the other ingredients being equal. Said value is preferably 3%.

The term "stevia" used herein refers, in particular, to a purified powdered extract obtained from the leaves of *Stevia rebaudiana* containing steviol glycosides amounting to at least 95% of the dry matter.

The percentages by weight of stevia typically range from 0.05 to 1% by weight of the composition, preferably from 0.1 to 0.5% by weight.

Any composition of the water-soluble part of the chewing gum as conventionally known can be deemed suitable for the purposes of the invention.

The gums according to the invention are pleasant to chew and stable, as they are not sobject to the above-mentioned plasticising effect.

The following example illustrates the invention described above.

| Ingredients | % value by weight of gum base |
|---|---|
| Butyl rubber | 9.3 |
| Low-viscosity elastomer | 6.4 |
| Polymer plasticisers and resins | 36.0 |
| Plasticisers | 21.2 |
| Emulsifiers | 7.0 |
| Calcium carbonate | 20.0 |
| Purified powdered extract obtained from *Stevia rebaudiana* leaves, containing steviol glycosides amounting to at least 95% of the dry matter | 0.1 |

## Claims

1. A chewing gum comprising Stevia in percentages of at least 0.05% by weight on the total of the gum, calcium carbonate and butyl rubber as high viscosity elastomer.

2. A chewing gum according to claim 1 wherein the butyl rubber has a Mooney viscosity of 51 ± 5 units, as measurable by the ASTM D1646 method, and an unsaturation percentage ranging from 1% to 3%.

3. A chewing gum according to claim 1 or 2 wherein the calcium carbonate to high viscosity elastomer(s) weight ratio ranges from 1:1 to 15:1.

4. A chewing gum according to claim 3 wherein the calcium carbonate to high viscosity elastomer(s) weight ratio ranges from 2:1 to 13.5:1.

5. A chewing gum according to one or more of the above claims wherein the high viscosity elastomer(s) minimum percentage is 2%.

6. A chewing gum according to claim 5 wherein the high viscosity elastomer(s) minimum percentage is 3%.

7. A chewing gum according to claim 1 wherein the particle size of calcium carbonate ranges from 0.1 to 100 µm.

8. A chewing gum according to claim 7 wherein the particle size of calcium carbonate ranges from 0.1 to 30 µm.

9. A chewing gum according to claim 8 wherein the particle size of calcium carbonate ranges from 0.1 to 15 µm.

## Patentansprüche

1. Kaugummi, umfassend Stevia in Prozentanteilen von wenigstens 0,05 Gew.-%, bezogen auf das Gesamtgewicht des Kaugummis, Calciumcarbonat und Butylkautschuk als hochviskoses Elastomer.

2. Kaugummi gemäß Anspruch 1, wobei der Butylkautschuk eine nach dem Verfahren gemäß ASTM D1646 messbare Mooney-Viskosität von 51 ± 5 Einheiten und eine prozentuale Unsättigung im Bereich von 1% bis 3% aufweist.

3. Kaugummi gemäß Anspruch 1 oder 2, wobei das Gewichtsverhältnis von Calciumcarbonat zu dem oder den hochviskosen Elastomeren im Bereich von 1:1 bis 15:1 liegt.

4. Kaugummi gemäß Anspruch 3, wobei das Gewichtsverhältnis von Calciumcarbonat zu hochviskosem Elastomer oder hochviskosen Elastomeren im Bereich von 2:1 bis 13,5:1 liegt.

5. Kaugummi gemäß einem oder mehreren der obigen Ansprüche, wobei der minimale Prozentanteil des oder der hochviskosen Elastomere 2% beträgt,

6. Kaugummi gemäß Anspruch 5, wobei der minimale Prozentanteil des oder der hochviskosen Elastomere 3% beträgt.

7. Kaugummi gemäß Anspruch 1, wobei die Teilchengröße von Calciumcarbonat im Bereich von 0,1 bis 100 µm liegt.

8. Kaugummi gemäß Anspruch 7, wobei die Teilchengröße von Calciumcarbonat im Bereich von 0,1 bis 30 µm liegt.

9. Kaugummi gemäß Anspruch 8, wobei die Teilchengröße von Calciumcarbonat im Bereich von 0,1 bis 15 µm liegt.

## Revendications

1. Gomme à mâcher comprenant de la stévia en pourcentages d'au moins 0,05 % en poids sur le total de la gomme, du carbonate de calcium et du caoutchouc butyle en tant qu'élastomère à viscosité élevée.

2. Gomme à mâcher selon la revendication 1, dans laquelle le caoutchouc butyle a une viscosité Mooney de 51 ± 5 unités, telle que mesurable par la méthode ASTM D1646, et un pourcentage d'insaturation allant de 1 % à 3 %.

3. Gomme à mâcher selon la revendication 1 ou 2, dans laquelle le rapport pondéral du carbonate de calcium à l'élastomère (aux élastomères) à viscosité élevée est compris entre 1:1 et 15:1.

4. Gomme à mâcher selon la revendication 3, dans laquelle le rapport pondéral du carbonate de calcium à l'élastomère (aux élastomères) à viscosité élevée est compris entre 2:1 et 13,5:1.

5. Gomme à mâcher selon une ou plusieurs des revendications ci-dessus, dans laquelle le pourcentage minimum d'élastomère(s) à viscosité élevée est de 2 %.

6. Gomme à mâcher selon la revendication 5, dans laquelle le pourcentage minimum d'élastomère(s) à viscosité élevée est de 3 %.

7. Gomme à mâcher selon la revendication 1, dans laquelle la taille de particule du carbonate de calcium est comprise entre 0,1 et 100 µm.

8. Gomme à mâcher selon la revendication 7, dans laquelle la taille de particule du carbonate de calcium est comprise entre 0,1 et 30 µm.

9. Gomme à mâcher selon la revendication 8, dans laquelle la taille de particule du carbonate de calcium est comprise entre 0,1 et 15 µm.
